# FASCICULE DE BREVET EUROPEEN

(11) **EP 0 497 065 B1**
(45) Date de publication et mention de la délivrance du brevet: **08.03.1995**
(21) Numéro de dépôt: 91400619.2
(22) Date de dépôt: 07.03.1991
(51) Int. Cl.: C07F 9/6561, A61K 31/675

(54) **Procédé industriel de préparation de dérivés phosphoniques de vinblastine**
Industrieverfahren zur Herstellung von Vinblastinphosphonsäurederivaten
Industrial process for the preparation of phosphonic derivatives of vinblastine

(30) Priorité: 31.01.1991 FR 9101073
(43) Date de publication de la demande: 05.08.1992
(73) Titulaire: ADIR ET COMPAGNIE, 92415 Courbevoie Cédex (FR)
(72) Inventeur: Thevignot, Roger, F-76210 Bolbec (FR)
(74) Mandataire: Reverbori, Marcelle

(56) Documents cités:
- EP-A- 0 346 235
- TETRAHEDRON LETTERS, no. 14, 1975, pages 1219-1222, Pergamon Press, GB; B.CASTRO et al.: "Reactifs de couplage peptidique IV (1) - L'hexafluorophosphatede benzotriazolyl N-oxytrisdimethylamino phosphonium (B.O.P.)"

## Description

La présente invention a pour objet un nouveau procédé industriel de préparation du N-(desacétyl-0-4 vinblastinoyl-23) amino-1 méthyl-2 propylphosphonate de diéthyle (1S) et de ses sels.

Le N-(disacétyl-0-4 vinblastinoyl-23) amino-1 méthyl-2 propylphosphonate de diéthyle (1S) et ses sels, décrits dans la demande de brevet européen publiée sous le n° 0318.392, possédent des propriétés pharmacologiques très intéressantes qui permettent de les utiliser en thérapeutique notamment dans le traitement des maladies néoplasiques chez l'être vivant.

En ce qui concerne le procédé de préparation de cet ester et de ses sels, l'état antérieur de la technique est illustré par la demande de brevet européen n° 0318.392 laquelle décrit un procédé qui consiste à faire réagir un excès d'hydrazine anhydre sur une solution méthanolique de vinblastine base pour former le N-(desacétyl-0-4 vinblastinoyl-23) hydrazide que l'on transforme, au moyen de nitrite de sodium, en milieu acide, en descarbométhoxy-3 desacétyl-0-4 vinblastine carboxazide-3, que l'on fait réagir avec l'amino-1 méthyl-2 propylphosphonate de diéthyle pour obtenir le N-(desacétyl-0-4 vinblastinoyl-23) amino-1 méthyl-2 propylphosphonate de diéthyle, lequel peut être purifié par chromatographie et si on le désire salifié par un acide convenable en milieu éthanolique.

Un tel procédé conduit à un rendement relativement faible (n'excédant par 30 %) et surtout difficilement exploitable industriellement en raison de l'emploi d'hydrazine anhydre, dont la manipulation est dangereuse et de l'instabilité de l'intermédiaire azidique formé au cours de la synthèse.

C'est la raison pour laquelle, en plus de l'intérêt thérapeutique du produit, la demanderesse a effectuée des recherches dont l'aboutissement est l'objet de la présente invention.

La présente invention a donc pour objet le procédé industriel de préparation du N-(desacétyl-0-4 vinblastinoyl-23) amino-1 méthyl-2 propylphosphonate de diéthyle (1S) de formule I : 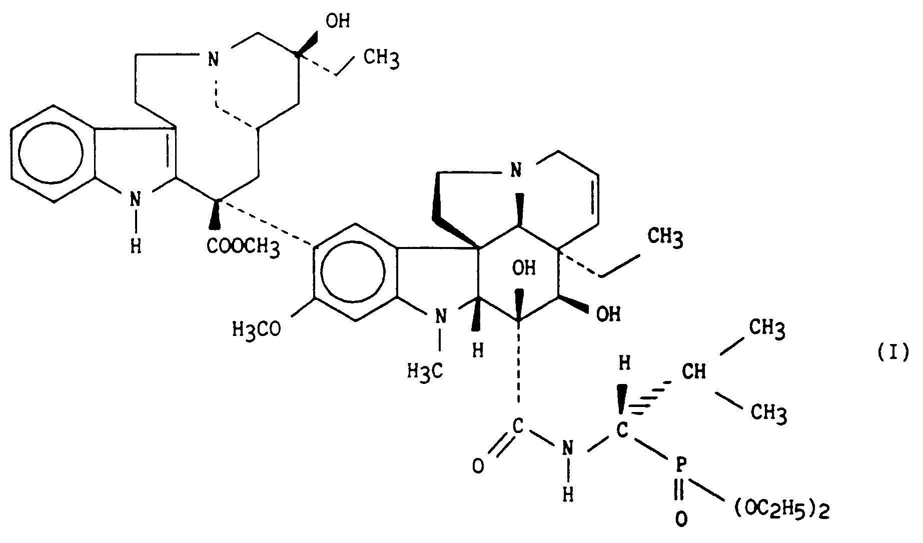
caractérisé en ce que :
- l'on condense l'acide desacétyl-0-4 vinblastinoïque de formule II : 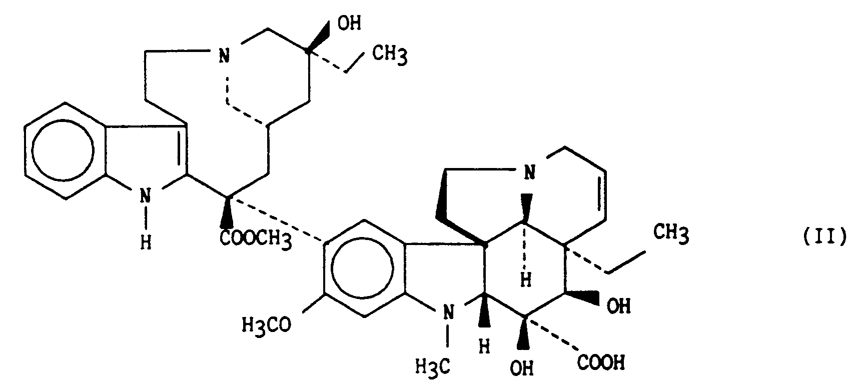
- avec l'isomère dextrogyre de la Phosamine ou amino-1 méthyl-2 propylphosphonate de diétyle de formule III : 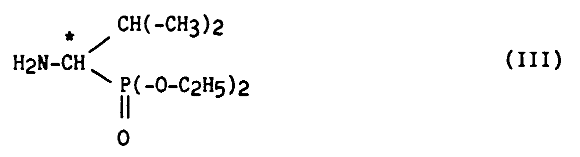 au moyen du réactif de couplage peptidique BOP ou hexafluorophosphate de benzotriazolyl-1-oxy-tris (diméthylamino) phosphonium ;
- et si on le désire, le produit obtenu est purifié par chromatographie préparative sur silice puis transformé en sels d'addition avec les acides appropriés.

Il est particulièrement avantageux d'effectuer la condensation des composés II et III au moyen du réactif de couplage BOP en présence de triéthylamine et au sein du tétrahydrofurane.

L'acide desacétyl-0-4 vinblastinoïque (II) de départ a été préparé par hydrolyse alcaline du sulfate de vinblastine.

La phosamine, matière première de formule III est un produit connu [cf Synthesis (1981), 57].

Le procédé objet de la présente invention possède par rapport au procédé décrit dans la demande de brevet européen n° 0318.392 des avantages importants notamment au niveau de la qualité, de la réalisation industrielle et de la sécurité.

En effet, l'absence de produits secondaires dans le présent procédé conduit à une meilleure qualité du milieu réactionnel et une qualité accrue du produit final dont la pureté est supérieure à 98 % alors qu'elle n'excédait pas 95 % avec le procédé antérieur.

La présente synthèse se fait en deux étapes au lieu de trois par le procédé antérieur à partir de vinblastine (base ou sulfate selon le cas). Le rendement est très supérieur à celui obtenu avec le procédé antérieur (60 % au lieu de 25-30 %).

Stabilité, sécurité et reproductibilité absentes dans le procédé classique parce que liées à l'instabilité de l'intermédiaire azidique, existent dans le présent procédé dans lequel la non manipulation de produit dangereux (hydrazine anhydre) accroit également la sécurité.

Les exemples suivants illustrent la présente invention sans toutefois la limiter.

### EXEMPLE 1 :

### Préparation de N-(desacetyl-0-4 vinblastinoyl-23) amino-1 méthyl-2 propylphosphonate de diéthyle (1S).

**a)** préparation de l'acide desacétyl-0-4 vinblastinoïque :
   10 g (10,78.10⁻³ moles) de vinblastine sulfate à 98 % sont mis en suspension dans 60 ml de méthanol pur de synthèse. On agite, purge à l'argon et coule en 5 minutes 15 ml d'une solution 4N de soude. On laisse agir à 25 ± 5°C pendant 72 heures à l'abri de la lumière, puis acidifie à pH voisin de 5 par addition d'environ 1 ml d'acide acétique.
   On élimine sous vide le méthanol et reprend le concentrat dans 100 ml d'eau et 50 ml de chlorure de méthylène.
   Après neutralisation à pH 7,2 par addition de bicarbonate de sodium, l'acide précipite.
   On refroidit dans la glace pendant 1 heure, filtre, lave à l'eau glacée, et sèche le produit filtré à 25°C sous vide en présence d'anhydride phosphorique.
   On obtient ainsi (avec un rendement de 80 %) 6,90 g d'acide desacétyl-0-4 vinblastinoïque, amorphe, titrant 95 % (CLPH).
**b)** préparation de N-(desacétyl-0-4 vinblastinoyl-23) amino-1 méthyl-2 propylphosphonate de diéthyle (1S) :
   6,64 g (8,35.10⁻³ moles) d'acide desacétyl-0-4 vinblastinoïque, précédemment préparé, sont mis en suspension et agités sous argon dans 46,5 ml de tétrahydrofurane anhydre séché sur tamis moléculaires. On refroidit entre 0 et -2°C et ajoute 1,075 g (10,64.10⁻³ moles) de triéthylamine, 2,23 g (10,65.10⁻³ moles) d'isomère dextrogyre de l'amino-1 méthyl-2 propylphosphonate de diéthyle [ou phosamine(+)] et, en 15 minutes, par fractions, 4,71 g (10,64.10⁻³ moles) de réactif BOP Fluka [ou hexafluorophosphate de benzotriazolyl-1-oxy-tris (diméthylamino) phosphonium].

On agite vigoureusement le mélange jusqu'a dissolution (ce qui demande environ 7 heures) puis laisse reposer pendant 67 heures à 0°C. On élimine ensuite le tétrahydrofurane sous vide, reprend le résidu dans 500 ml de chlorure de méthylène et lave successivement par 100 ml d'eau, 100 ml d'une solution normale d'acide chlorhydrique, 50 ml d'une solution aqueuse de bicarbonate de sodium à 7 % et enfin 200 ml d'eau.

On élimine ensuite, sous vide, le chlorure de méthylène. On obtient ainsi, (avec un rendement de 83 %) 8,24 g de N-(desacétyl-0-4 vinblastinoyl-23) amino-1 méthyl-2 propylphosphonate de diéthyle (1S), titrant 80 % (CLHP).

Le produit ainsi obtenu peut être purifié par chromatographie préparative sur colonne inox Jobin Yvon que l'on charge avec :
- 2 kg de silice Merck RP 18,25-40», 60 Å
- 15 g de N-(desacetyl-0-4 vinblastinoyl-23) amino-1 méthyl-2 propylphosphonate de diéthyle (1S) brut (80 % CLHP) et 100 l d'éluant formé de méthanol-phosphate disodique (70-30).

Les fractions d'éluats contenant le produit purifié sont évaporées sous vide, le concentrat est extrait par 8 fois 250 ml de chlorure de méthylène et les extraits mis à sec par élimination sous vide du chlorure de méthylène.

Le résidu est dissous dans 50 ml de chlorure de méthylène et la solution est clarifiée sur filtre millipore 0,5», puis à nouveau évaporée à sec. On obtient ainsi (avec un rendement de 58 %) 7,33 g de N-(desacétyl-0-4 vinblastinoyl-23) amino-1 méthyl-2 propylphosphonate de diéthyle (1S) purifié sous forme d'une poudre amorphe blanc jaunâtre titrant 97-98 % (CLHP).

### EXEMPLE 2 :

### Préparation du sulfate de N-(desacétyl-0-4 vinblastinoyl-23) amino-1 méthyl-2 propylphosphonate de diéthyle (1S) : 5,36 g (5,38.10⁻³ moles) de N-(desacétyl-0-4 vinblastinoyl-23) amino-1 méthyl-2 propylphosphonate de diéthyle (1S) purifié sont dissous à température ambiante dans 20,75 g (5,66.10⁻³ moles) d'éthanol sulfurique (0,273 mole/kg) ; (la solution d'éthanol sulfurique étant préparée par addition d'un mélange de 3,2 ml d'H₂SO₄ concentré d : 1,83, et de 5 ml d'eau à de l'éthanol qsp 250 ml, la solution est alors titrée et utilisée extemporanément).

La solution est filtrée sur millipore FH 0,5», on lave par 6 ml d'éthanol, puis coule la solution sur 900 ml de méthyl t.butyl éther.

Après un repos de 2 heures, le précipité formé est filtré, lavé par 3 fois 10 ml de méthyl t.butyl éther, puis séché sous vide à 20 °C. On obtient ainsi avec un rendement de 93 %, 5,25 g de sulfate de N-(desacétyl-0-4 vinblastinoyl-23) amino-1 méthyl-2 propylphosphonate de diéthyle (1S), sous forme d'une poudre blanc jaunâtre titrant 98 % (CLHP).

## Revendications

1. Procédé de préparation du N-(desacétyl-0-4 vinblastinoyl-23) amino-1 méthyl-2 propylphosphonate de diéthyle (1S) de formule I : 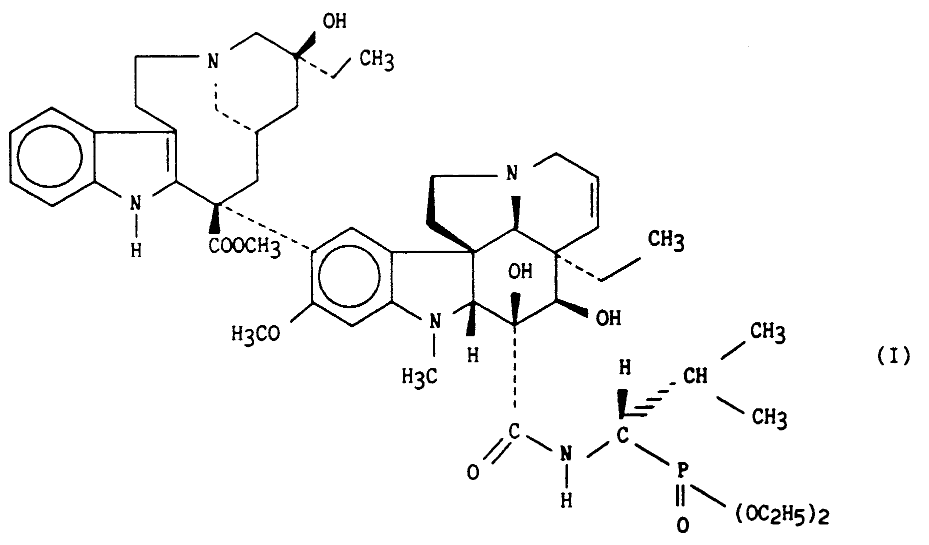 et de ses sels,
caractérisé en ce que :
- l'on condense l'acide desacétyl-0-4 vinblastinoïque de formule II : 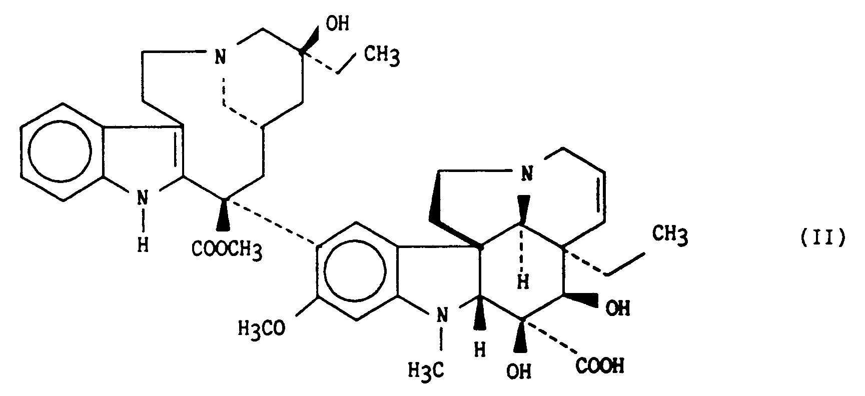
- avec l'isomère dextrogyre de la Phosamine ou amino-1 méthyl-2 propylphosphonate de diétyle de formule III : 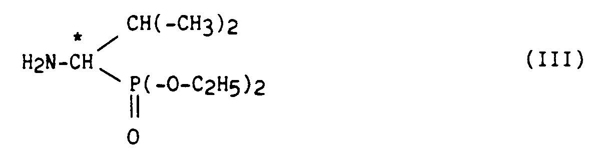 au moyen du réactif de couplage peptidique BOP ou hexafluorophosphate de benzotriazolyl-1-oxy-tris (diméthylamino) phosphonium ;
- et si on le désire, le produit obtenu est purifié par chromatographie préparative sur silice puis transformé en sels d'addition avec les acides appropriés.

2. Procédé selon la revendication 1 caractérisé en ce que la condensation des composés II et III au moyen du réactif de couplage BOP est effectuée en présence de triéthylamine en milieu tétranydrofurane.

3. Procédé selon la revendication 1 caractérisé en ce que l'acide desacétyl-0-4 vinblastinoïque (II) de départ est préparé par hydrolyse alcaline du sulfate de vinblastine.

4. Procédé selon la revendication 1 caractérisé en ce que le N-(desacétyl-0-4 vinblastinoyl-23) amino-1 méthyl-2 propylphosphonate de diéthyle (1S) de formule (I) est salifié par l'acide sulfurique au sein de l'éthanol pour donner le sulfate de N-(desacétyl-0-4 vinblastinoyl-23) amino-1 méthyl-2 propylphosphonate de diéthyle (1S).

## Claims

1. Process for the preparation of (1S)-1-[N-(4-O-deacetyl-23-vinblastinoyl)amino]-2-methylpropyl diethyl phosphonate of the formula I: 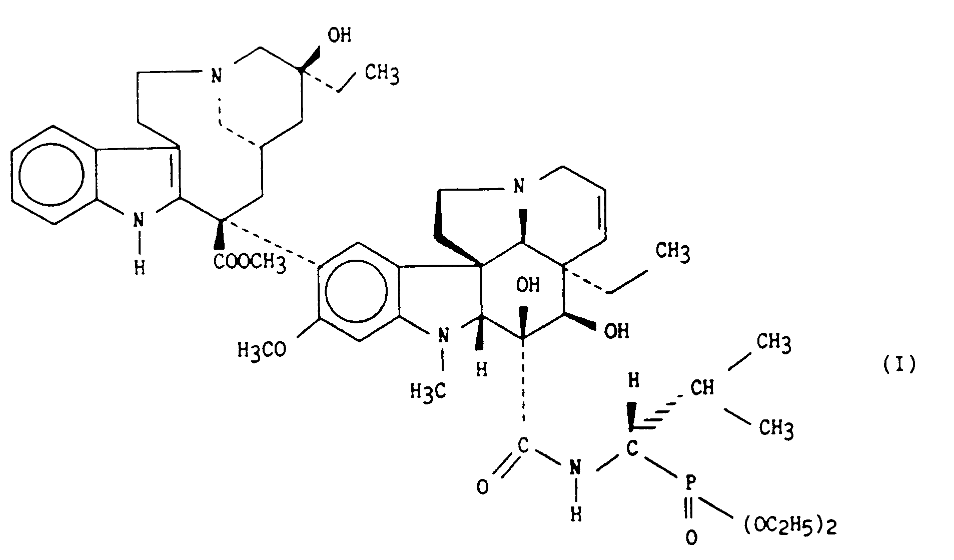 and its salts,
characterised in that:
- 4-O-deacetylvinblastinoic acid of the formula II: 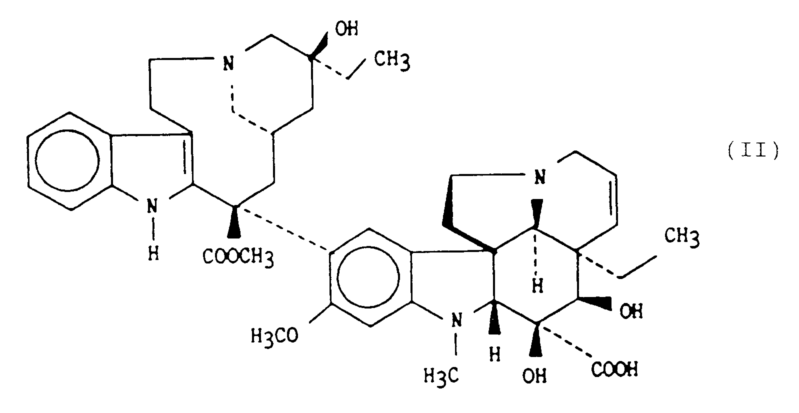 is condensed with the dextrorotatory isomer of phosamine or 1-amino-2-methylpropyl diethyl phosphonate of the formula III: 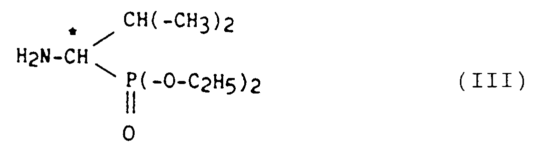 by means of the peptide coupling reagent BOP or 1-benzotriazolyloxy-tris(dimethylamino)phosphonium hexafluorophosphate;
- and, if desired, the product obtained is purified by preparative chromatography on silica and then converted into addition salts with suitable acids.

2. Process according to claim 1, characterised in that the condensation of compounds II and III by means of the coupling reagent BOP is carried out in the presence of triethylamine in a tetrahydrofuran medium.

3. Process according to claim 1, characterised in that the 4-O-deacetylvinblastinoic acid (II) used as starting material is prepared by alkaline hydrolysis of vinblastine sulphate.

4. Process according to claim 1, characterised in that the (1S)-1-[N-(4-O-deacetyl-23-vinblastinoyl)amino]-2-methylpropyl diethyl phosphonate of formula (I) is converted into a salt by means of sulphuric acid in ethanol to give (1S)-1-[N-(4-O-deacetyl-23-vinblastinoyl)amino]-2-methylpropyl diethyl phosphonate sulphate.

## Patentansprüche

1. Verfahren zur Herstellung von (1S)-N-(4-O-Desacetyl-23-vinblastinoyl)-1-amino-2-methyl-propylphosphonsäurediethylester der Formel I: 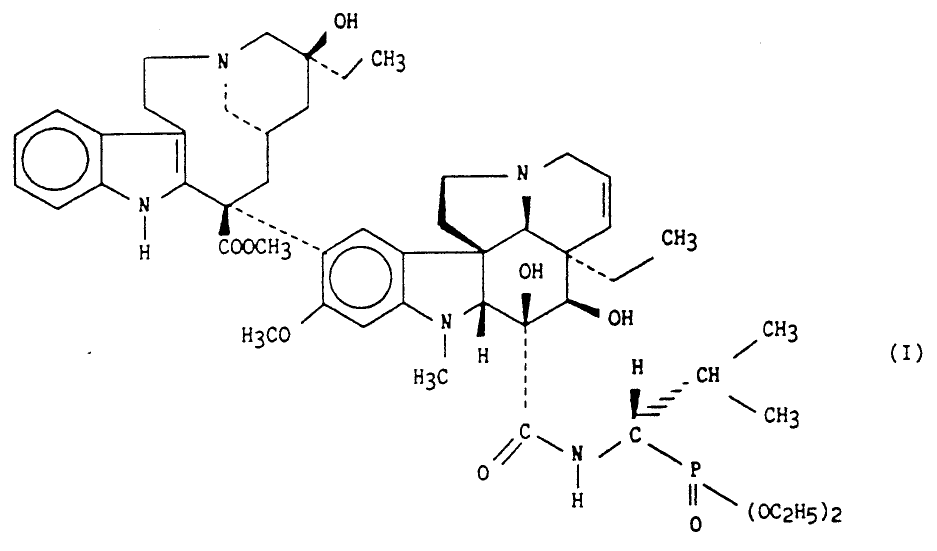 und von dessen Salzen,
**dadurch gekennzeichnet**, daß man
- 4-O-Desacetyl-vinblastinsäure der Formel II: 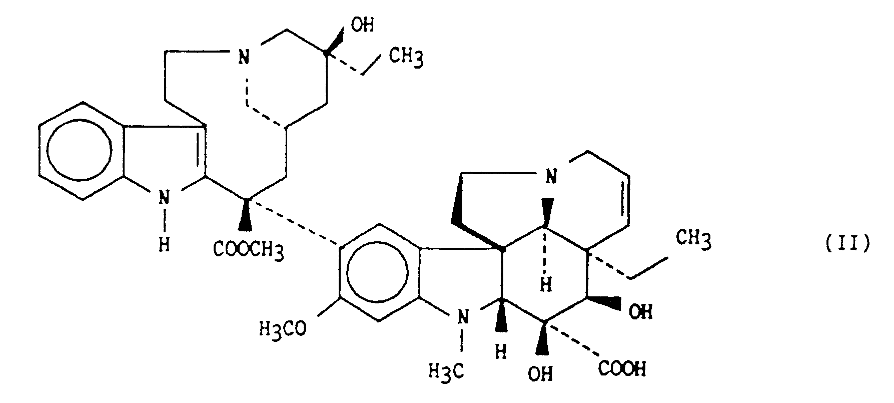
- mit dem rechtsdrehenden Isomeren von Phosamin oder 1-Amino-2-methyl-propylphosphonsäurediethylester der Formel III: 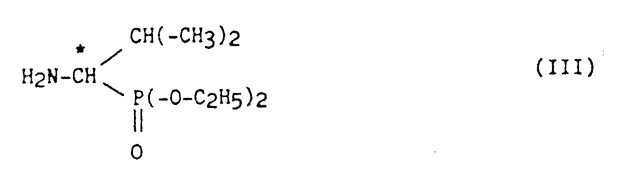 mit Hilfe des Peptidkupplungsreagens BOP oder 1-Benzotriazolyl-oxy-tris(dimethylamino)-phosphonium-hexafluorphosphat kondensiert;
- und gewünschtenfalls das erhaltene Produkt durch präparative Chromatographie über Siliciumdioxid reinigt und dann mit geeigneten Säuren in die Additionssalze umwandelt.

2. Verfahren nach Anspruch 1, **dadurch gekennzeichnet**, daß die Kondensatoin der Verbindungen II und III mit Hilfe des Kupplungsreagens BOP in Gegenwart von Triethylamin in Tetrahydrofuran als Medium durchgeführt wird.

3. Verfahren nach Anspruch 1, **dadurch gekennzeichnet**, daß die als Ausgangsmaterial eingesetzte 4-O-Desacetyl-vinblastinsäure (II) durch alkalische Hydrolyse von Vinblastinsulfat hergestellt wird.

4. Verfahren nach Anspruch 1, **dadurch gekennzeichnet**, daß man (1S)-N-(4-O-Desacetyl-23-vinblastinoyl)-1-amino-2-methyl-propylphosphonsäurediethylester der Formel (I) mit Schwefelsäure in Ethanol in das Sulfat des (1S)-N-(4-O-Desacetyl-23-vinblastlnoyl)-1-amino-2-methyl-propylphosphonsäurediethylesters umwandelt.
